Europäisches Patentamt

European Patent Office

Office européen des brevets

(11) Publication number: **0 462 455 A1**

## EUROPEAN PATENT APPLICATION

(21) Application number: **91109258.3**

(22) Date of filing: **06.06.91**

(51) Int. Cl.⁵: **B32B 27/36**, B32B 27/10, B65D 65/40

(30) Priority: **13.06.90 SE 9002100**

(43) Date of publication of application:
**27.12.91 Bulletin 91/52**

(84) Designated Contracting States:
**AT BE CH DE DK ES FR GB GR IT LI LU NL SE**

(71) Applicant: **Tetra Pak Holdings S.A.**
**70, Avenue Général-Guisan**
**CH-1009 Pully(CH)**

(72) Inventor: **Löfgren, Lars**
**Krusbärsvägen 4**
**S-24500 Staffanstorp(SE)**
Inventor: **Svensson, Cecilia**
**Västervang 14**
**S-24017 Södra Sandby(SE)**

(74) Representative: **Sundell, Hakan**
**AB Tetra Pak Ruben Rausings gata**
**S-221 86 Lund(SE)**

(54) Laminated packaging material with good oxygen and aroma barrier properties and manner of manufacturing the material.

(57) Laminated packaging material for packaging of juice and other oxidisation-sensitive liquids containing polar aromatic substances. The material exhibits as an aroma barrier a layer (2) of an acid-modified polyethylene terephthalate which has on the one hand low absorption of the said aromatic substances and on the other hand sufficiently low oxygen permeability to give the packaged juice or liquid satisfactory chemical product protection in cold storage.

*Fig.1*

The present invention concerns a laminated packaging material in the form of a sheet or strip containing a base layer of paper or cardboard and a layer of modified polyethylene terephthalate joined to the base layer and giving the packaging material good oxygen and aroma barrier properties.

The invention also concerns a manner of manufacturing the lanminated packaging material and a packaging manufactured from the packaging material.

Within packaging technology packagings of disposable character manufactured from laminated packaging material are often used for packaging and transporting liquid foods. The requirement set for these so-called once-only packagings is of course that they must give as good a mechanical and chemical protection as possible to the packaged product at the same time as they must be easy both to manufacture and to handle.

A very large group of known disposable packagings is now most often manufactured with the aid of modern rational packaging machines of the type that from a packaging material in the form of a sheet or strip both forms, fills and closes finished packagings. From for example a strip, packagings are manufactured through the strip first being formed to a tube through the two longitudinal edges of the strip being bent towards and joined to each other in an overlap joint. The tube is filled with the desired contents and divided up into closed packaging units through repeated pressings flat and sealings of the tube along narrow transverse tube zones under the tube's contents level. The packaging units are separated from each other by cuts in the transverse sealing zones and given the desired final form, usually parallelepiped-shaped, through a subsequent forming operation. A well known example of a packaging which is manufactured according to this principle is Tetra Brik (reg. trade mark).

Another well known example of packaging is Tetra Rex (reg. trade mark). This well known packaging is manufactured from a sheet of the packaging material through two opposite edges of the sheet being bent towards and joined to each other in a longitudinal overlap joint for formation of a tubular packaging capsule. One end of the capsule corresponding to the bottom of the finished packaging is closed through a folding and sealing operation after which the capsule provided with a bottom is filled with the desired contents and given a suitable top closure through a further folding and sealing operation.

The material in these two aforementioned types of packaging as also in other known types of disposable packagings usually consists of paper or cardboard with outer coatings of plastic, preferably polythene. A packaging material consisting only of paper or cardboard and polythene lacks or has only very little oxygen-tightness and barrier properties against certain aromatic substances occurring in for example fruit juice and thus gives an unsatisfactory chemical protction to contents of this type which are both oxygen-sensitive and aroma-sensitive and therefore would quickly be spoilt or deteriorate if they were packaged and kept in packagings of this material. Most frequently the material is therefore provided with one or more layers serving as an oxygen and aroma barrier, usualy an aluminium foil which is for practical purposes impermeable for oxygen and in addition has very little tendency to absorb aromatic substances occurring in fruit juices. The problem with aluminium foil is, however, that it is not very stretchable and breaks easily owing to the mechanical stresses to which the packaging material is exposed when it is shaped to a packaging and which are particularly great in the area along which multiple layers of material must be folded, what is known as the cross area.

Another known technology which is described in for example US patents 4,698,2436 and 4,753,832 takes as a basis using instead of aluminium foil a layer of a polyester material as an aroma barrier in the laminated packaging material. The known polyester material must according to these two indications consist of a glycol-modified polyethylene terephthalate (PETG). The PETG layer gives the packaging material good barrier properties against aromatic substamnces occurring in fruit juices, but has in comparison with an aluminium foil relatively high oxygen permeability.

An aim of the present invention is therefore to give indications about laminated packaging material which in contrast to similar known packaging materials has good barrier properties against both aromatic substances and oxygen.

Another aim is to indicate a laminated packaging material for fruit juices and similar contents containing aromatic substances of hydrocarbon, ester and alcohol type.

These aims are achieved according to the invention through the fact that laminated packaging material of the type described in the introduction is given the characteristic that the oxygen and aroma barrier layer is a layer, extruded against one side of the base layer, of an acid-modified polyethylene terephthalate.

A further aim of the invention is to see to a method of manufacturing the laminated packaging material.

This aim is achieved according to the invention through the fact that a layer of an acid-modified polyethylene terephthalate is extruded against and joined to one side of a strip or sheet of paper or cardboard.

An acid-modified polyethylene terephthalate of the type SELAR PT (reg. trade mark) is particularly preferred according to the invention since it showed itself to have particularly good barrier properties against aromatic substances occurring in fruit juices at the same time as it has more than twice as good oxygen impermeability compared with the previously proposed glycol-modified polyethylene terephthalate (PETG).

The invention will be described in greater detail below with particular reference to the enclosed drawing in which

Figure 1 shows schematically a cross section of a laminated packaging material according to a preferred embodiment of the invention and

Figure 2 schematically explains a manner of manufacturing the packaging material in figure 1.

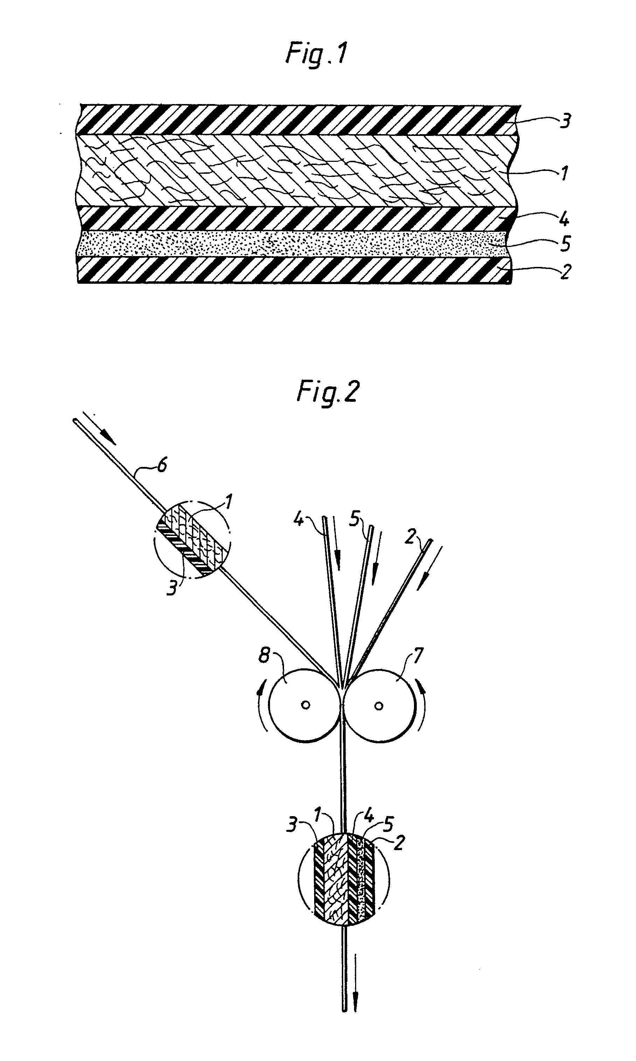

As can be seen from figure 1 the laminated packaging material preferably has a base layer 1 of paper or cardboard and, fitted against one side of the base layer (corresponding to the inside of the finished packagings), an oxygen and aroma barrier layer 2 of an acid-modified polyethylene terephthalate of the type SELAR PT (reg. trade mark).

The other side of the base layer 1 has an outer plastic coating 3 consisting preferably of polythene. Between the base layer 1 and the oxygen and aroma barrier layer 2 there are lamination layers 4 and 5 with the aid of which the oxygen and aroma barrier layer 2 is joined with good adhesion to the base layer 1. In the example shown the lamination layer 4 consists of polythene and the lamination layer 5 of an adhesive of the type Bynel (reg. trade mark) which together in the mutual order shown give the desired good adhesion between the base layer 1 and the oxygen and aroma barrier layer 2.

From the packaging material, which can for example be of strip form, packagings are manufactured according to known technology through the two longitudinal edges of the strip being sealed to each other in an overlap joint in which overlapping zones of the material's oxygen and aroma barrier layer 2 and outer polythene coating 3 are joined to each other through fusing together for formation of a tube. The tube is filled with the desired contents, e.g. fruit juice, and divided up into closed packaging units through repeated pressings flat and sealings of the tube across the longitudinal direction of the tube under the tube's contents level. The packaging units are separated from each other by cuts in the transverse sealing zones and thereafter given the desired geometric final shape, e.g parallelepiped shaped.

In accordance with figure 2 the packaging material shown is manufactured according to the invention through a strip 6 of paper or cardboard, one side of which has a polythene coating 3, being coated on its other side with an extruded oxygen and aroma barrier layer of an acid-modified polyethylene terephthalate 2, preferably of the type SELAR PT, which is durably joined to the polythene coated paper or cardboard strip by means of intermediate extruded lamination layers 4 and 5 of polythene and an adhesive (e.g. Bynel) respectively, with the lamination layer 4 being extruded nearest to and in contact with the uncoated side of the paper or cardboard. The paper or cardboard strip thus coated is then taken through the jaws between two cold rollers 7 and 8 rotating together for formation of the finished packaging material.

In the manner as above it has shown itself particularly suitable to apply both the oxygen and aroma barrier layer and the two intermediate lamination layers through co-extruding.

## Claims

1. Laminated packaging material in sheet or strip form comprising a base layer (1) of paper or cardboard and a layer (2) of modified polyethylene terephthalate joined to the base layer, which gives the packaging material good oxygen and aroma barrier properties, **characterised by the fact** that the oxygen and aroma barrier layer (2) is a layer of an acid-modified polyethylene terephthalate extruded against one side of the base layer.

2. Laminated packaging material according to claim 1, **characterised by the fact** that the oxygen and aroma barrier layer (2) is joined to the base layer by means of one or more intermediate extruded lamination layers (4 and 5).

3. Laminated packaging material according to claim 2, **characterised by the fact** that the oxygen and aroma barrier layer (2) and the said lamination layers (4 and 5) are extruded together.

4. Laminated packaging material according to any of the foregoing claims, **characterised by the fact** that the oxygen and aroma barrier layer (2) is arranged as an outer layer for direct contact with the contents in a packaging manufactured from the laminated packaging material.

5. Method of manufacturing a laminated packaging material in sheet ot strip form according to claim 1, **characterised by the fact** that a layer of an acid-modified polyethylene terephthalate is extruded against and joined to one side of a strip or sheet of paper or cardboard.

6. Method according to claim 5, **characterised by the fact** that the extruded layer of acid-modified polyethylene terephthalate is joined to the strip or sheet by means of extruded lamination layers which are applied between the strip or sheet and the layer of acid-modified polyethylene terephthalate.

7. Method according to claim 6, **characterised by the fact** that the layer of acid-modified polyethylene terephthalate and the said lamination layers are extruded together.

8. Packaging container for oxygen-sensitive liquid contents containing polar aromatic substances, **characterised by the fact** that it is manufactured from a laminated packaging material according to any of the claims 1-4.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| Y | EP-A2-0 215 630 (THE PROCTER & GAMBLE COMPANY) 25 March 1987 *Claim 1* | 1-8 | B 32 B 27/36, 27/10, B 65 D 65/40 |
| | --- | | |
| Y | EP-A2-0 211 649 (E.I. DU PONT DE NEMOURS AND COMPANY) 25 February 1987 *Column 2, line 20 - line 27 | 1-8 | |
| | ----- | | |

| | TECHNICAL FIELDS SEARCHED (Int Cl⁵) |
|---|---|
| | B 32 B; B 65 D |

The present search report has been drawn up for all claims

| Place of search | Date of completion of the search | Examiner |
|---|---|---|
| STOCKHOLM | 05-09-1991 | SVENSSON E. |